# EUROPÄISCHE PATENTSCHRIFT

(11) **EP 1 467 543 B1**
(45) Veröffentlichungstag und Bekanntmachung des Hinweises auf die Patenterteilung: **06.09.2006**
(21) Anmeldenummer: 04006176.4
(22) Anmeldetag: 16.03.2004
(51) Int. Cl.: H04M 1/60, H04M 1/725

(54) **System, Betriebsverfahren und Benutzerschnittstelle für Funkkommunikationen mit einem Einschränkungs-Betriebsmodus in einem Kraftfahrzeug**
System, method and user interface for restricting mobile communications within a vehicle
Système, procédé et interface utilisateur pour limiter les communications mobiles dans un véhicule

(30) Priorität: 09.04.2003 DE 10316477
(43) Veröffentlichungstag der Anmeldung: 13.10.2004
(73) Patentinhaber: DaimlerChrysler AG, 70567 Stuttgart (DE)
(72) Erfinder: Entenmann, Volker, 71563 Affalterbach (DE); Hess, Markus, 73666 Baltmannsweiler (DE); Rothe, Siegfried, 73770 Denkendorf (DE)

(56) Entgegenhaltungen:
- EP-A- 0 851 647
- EP-A- 0 955 210
- EP-A- 1 071 297
- US-B1- 6 311 078

## Beschreibung

Die Erfindung betrifft ein Kommunikationssystem für ein Kraftfahrzeug nach dem Oberbegriff des Patentanspruchs 1 und ein zugehöriges Betriebsverfahren.

Telefongespräche während der Fahrt stellen im Hinblick auf die Fahr- und Verkehrssicherheit ein Problem dar. So ist darauf zu achten, dass ein Fahrer durch die Bedienung des Telefons und durch das Führen des Telefongesprächs nicht von seiner primären Fahraufgabe und von einer Beobachtung des verkehrlichen Umfeldes abgelenkt wird.

Freisprecheinrichtungen im Fahrzeug sind eine bekannte und oftmals sogar vorgeschriebene Maßnahme, dieser Bedienproblematik entgegenzuwirken. So gibt es beispielsweise in heutigen Fahrzeugbaureihen Lenkradtasten, die es dem Fahrer ermöglichen, während der Fahrt Telefonanrufe entgegenzunehmen oder zu beenden, ohne die Hände vom Lenkrad nehmen zu müssen. Allerdings kann es zu Fahrsituationen kommen, in denen es schwierig ist, die Lenkradtasten zu bedienen, beispielsweise in engen Kurven.

Neben der Bedienung des Telefons trägt aber auch die kognitive Belastung des Fahrers durch das Telefongespräch wesentlich zur Ablenkung bei. Der Fahrer darf die Beobachtung der anderen Verkehrsteilnehmer trotz Konzentration auf das Telefongespräch nicht vernachlässigen. Außerdem fühlt sich der Fahrer in der Regel verpflichtet, einen eingehenden Telefonanruf auch dann anzunehmen, wenn er aufgrund der momentanen Fahrsituation eigentlich gar nicht in der Lage dazu ist.

Ein weiteres Problem sind abrupte Unterbrechungen einer bestehenden Kommunikationsverbindung, beispielsweise bei der Einfahrt in einen Tunnel oder bei Erreichen eines Gebietes, das nicht durch das Mobilfunknetz abgedeckt ist. Zum einen schmälern solche plötzlichen Unterbrechungen natürlich den Komfort, zum anderen führen sie aber auch zu neuen Bedienhandlungen, die der Fahrer ausführen muss, um die soeben unterbrochene Telefonverbindung wieder herzustellen.

In WO 03/001832 A1 wird eine Benutzerschnittstelle und ein Kommunikationssystem für ein Kraftfahrzeug mit einer Funkschnittstelle zum drahtlosen Anschluss an ein Funkkommunikationsnetz und zum Aufbau einer entsprechenden Kommunikationsverbindung beschrieben, wobei eine Funktionalität der Funkschnittstelle einschränkbar ist. Die Einschränkung der Funkschnittstelle besteht darin, dass eingehende Telefonanrufe in Abhängigkeit von vorgebbaren Bedingungen in eine Mailbox umgeleitet werden, die der Fahrer zu einem späteren Zeitpunkt abhören kann. Solche Bedingungen sind beispielsweise ein Durchfahren von sensiblen Ortsbereichen oder eine Fahrzeuggeschwindigkeit, die innerhalb von vorgegebenen Geschwindigkeitsbereichen liegt. Die Informationen über die sensiblen Ortsbereiche liefert dabei ein Navigationssystem.

Das häufigste Argument aus der Sicht des Kunden gegen ein Unterdrücken bzw. Weiterleiten von Telefonanrufen ist, dass es sich um einen sehr wichtigen Anruf handeln könnte, den man auf keinen Fall verpassen möchte, weil dies schwerwiegende Konsequenzen persönlicher, beruflicher oder finanzieller Art haben könnte. Bei den bislang bekannten Lösungen entscheidet ausschließlich das Fahrzeugsystem, ob ein Anruf unterdrückt bzw. weitergeleitet wird, ohne dabei etwas über die Dringlichkeit und Wichtigkeit des Anrufs zu wissen.

Die EP 1 071 297 A2 beschreibt ein Autotelefon, dessen Betrieb bei Vorliegen bestimmter Fahrsituationen eingeschränkt wird, wobei der Fahrer jedoch von eingehenden Gesprächen in Kenntnis gesetzt wird, um ihm Gelegenheit zu geben, seine Fahrweise zur Annahme des Telefonats anzupassen. Ansonsten wird die Telefonnummer des Anrufers gespeichert, die für einen automatischen Rückruf genutzt werden kann.

Aus der EP 0 955 210 A2 ist ebenfalls ein Autotelefon bekannt, dessen Betrieb abhängig von den aktuellen Verkehrsbedingungen durch eine Kontrolleinheit eingeschränkt wird. Die Kontrolleinheit veranlasst für Anrufe, die zu ungünstigen Verkehrsbedingungen eingehen, Mitteilungen an den Anrufer, und sorgt gegebenenfalls nach Unterbrechungen für eine Wiederaufnahme einer Verbindung.

Aufgabe der Erfindung ist es daher, ein verbessertes Kommunikationssystem für ein Kraftfahrzeug und ein zugehöriges Kommunikationsverfahren zur Verfügung zu stellen, bei denen Telefonkommunikationen situationsangepasst behandelt werden und dadurch sehr zuverlässig verhindert wird, dass der Fahrer von der eigentlichen Fahraufgabe abgelenkt wird. Zudem soll der Komfort verbessert werden, indem nicht zu vermeidende Unterbrechungen der Kommunikationsverbindung frühzeitig erkannt und Maßnahmen für eine gezielte Gesprächsführung getroffen werden.

Diese Aufgabe wird erfindungsgemäß durch ein Kommunikationssystem für ein Kraftfahrzeug mit den Merkmalen des Patentanspruchs 1 und durch das zugehörige Betriebsverfahren mit den Merkmalen des Patentanspruchs 22.

Die abhängigen Patentansprüche betreffen vorteilhafte Aus- und Weiterbildungen der Erfindung.

Ein Aspekt der Erfindung besteht darin, den Anrufer selbst über die Dringlichkeit seines Anrufs entscheiden zu lassen. Bei weniger wichtigen Gesprächen wird der Anrufer erwägen, den Anruf abzubrechen und später wieder anzurufen, wenn der Gesprächspartner den Anruf nicht sofort entgegennehmen kann. Bei dringenden und wichtigen Gesprächen ist er hingegen meist bereit, noch eine gewisse Zeit bis zur Durchstellung des Gesprächs zu warten. Dabei befindet sich der Anrufer in den meisten Fällen nicht selbst in einer Situation, die ein Handeln unter Zeitdruck erfordert oder ihn stark beansprucht.

Dazu ist in vorteilhafter Weise eine Benutzerschnittstelle vorgesehen, die in einem Einschränkungs-Betriebsmodus eine Funktionalität eines Kommunikationssystems in einem Kraftfahrzeug einschränken kann und im Betrieb mit eingeschränkter Funktionalität einem Anrufer mehrere Kommunikationsfunktionen zur Verfügung stellt, von denen dieser mindestens eine auswählen kann. In diesem Einschränkungs-Betriebsmodus wird vorzugsweise ein Anrufsignal eines eingehenden Anrufs unterdrückt, und der Fahrer bzw. der Benutzer kann den Telefonanruf dadurch nicht selbst entgegennehmen.

Bei einem einfachen Ausführungsbeispiel wird der Einschränkungs-Betriebsmodus der Benutzerschnittstelle vom Benutzer bzw. Fahrer durch eine entsprechende Eingabe aktiviert. Fühlt sich der Fahrer z.B. in einer Verkehrssituation stark belastet und möchte eingehende Telefonanrufe zwar jetzt entgegennehmen, aber das Telefongespräch erst später, d.h. nach dem Ende der Verkehrssituation führen, so kann er durch die Aktivierung des Einschränkungs-Betriebsmodus dem Anrufer signalisieren, dass er das Gespräch in Kürze entgegennehmen wird. Die Benutzereingabe kann beispielsweise über manuelle Betätigungsmittel in Form einer zusätzlichen Taste neben der Sende- und der Endtaste oder über einen "Softkey" erfolgen. Zusätzlich oder alternativ kann die Benutzereingabe auch über ein Sprachbedienungssystem erfolgen.

Ist der Einschränkungs-Betriebsmodus aktiviert, so kann der Fahrer das Gespräch führen, nachdem die Belastung durch die Verkehrssituation nachgelassen hat, vorausgesetzt der Anrufer hat gewartet.

Damit wird für ein entsprechendes Kommunikationssystem eine Benutzerschnittstelle bereitgestellt, die anstelle des Fahrers mit dem Anrufer kommuniziert, so dass der Fahrer in einer schwierigen Fahrsituationen nicht durch den eingehenden Anruf abgelenkt wird.

Die Benutzerschnittstelle stellt dem Anrufer, wie oben bereits ausgeführt wurde, mehrere Kommunikationsfunktionen zur Verfügung, aus denen der Anrufer eine Kommunikationsfunktion auswählen kann. So wird beispielsweise bei der Auswahl einer ersten Kommunikationsfunktion die Kommunikationsverbindung beendet, bei einer zweiten Kommunikationsfunktion wird der Anrufer mit einer Mailbox verbunden. Bei einer dritten Kommunikationsfunktion wird das Anrufsignal aktiviert und bei einer vierten Kommunikationsfunktion wird die Kommunikationsverbindung aufrechterhalten und nach Ablauf einer vorgegebenen Zeitspanne wird das Anrufsignal aktiviert.

Die Auswahl der Kommunikationsfunktionen erfolgt beispielsweise durch Betätigung einer vorgegebenen, der entsprechenden Kommunikationsfunktion zugewiesenen Zifferntaste am Telefon des Anrufers. Die auswählbaren Kommunikationsfunktionen können dem Anrufer beispielsweise durch eine Sprachausgabe und/oder durch eine schriftliche Ausgabe auf einer Anzeigeeinheit seines Telefons angezeigt werden.

Ein anderer Aspekt der Erfindung besteht darin, dass ein Kommunikationssystem für ein Kraftfahrzeug Mittel zum Erkennen von Verkehrssituationen umfasst, die Daten auswerten, um erste und/oder zweite Verkehrssituationen zu erkennen, wobei eine Funkkommunikation als nicht durchführbar festgelegt wird, wenn die ersten Verkehrssituationen erkannt werden, und eine Funkkommunikation als durchführbar festgelegt wird, wenn die zweiten Verkehrssituationen erkannt werden.

Bei einer vorteilhaften Ausführungsform des Kommunikationssystems werten die Mittel zum Erkennen von Verkehrssituationen in Abhängigkeit von einer vorgebbaren Route beispielsweise Daten von einem Navigationssystem und/oder von einem Ortungssystem und/oder von Stichprobenfahrzeugen und/oder von einer digitalen Straßenkarte aus, um erste Streckenabschnitte mit den ersten Verkehrssituationen und/oder zweite Streckenabschnitte mit den zweiten Verkehrssituationen zu erkennen. Bei Stichprobenfahrzeugen handelt es sich um Fahrzeuge, die im Straßenverkehr beteiligt sind und sogenannte FCD-Daten (Floating Car Data) oder XFCD-Daten (Extended Floating Car Data) aufnehmen und über eine Zentrale oder direkt an das Kommunikationssystem im Fahrzeug übermitteln, wobei die Daten beispielsweise Geschwindigkeitsdaten, Wetterdaten, Straßenzustandsdaten usw. umfassen. Mit den Daten von den beispielhaft aufgezählten Datenquellen können potentiell schwierige Streckenabschnitte wie beispielsweise Kurven, Ein- und Ausfahrten, Kreuzungen, Tunnel usw. erkannt werden, bei deren Befahren häufig die ersten Verkehrssituationen auftreten, bei denen eine Telefonkommunikation nicht durchführbar sein soll. Zusätzlich können zweite Streckenabschnitte erkannt werden, bei deren Befahren keine ersten Verkehrssituationen auftreten und die lang genug sind, um eine Funkkommunikation durchzuführen. Dies trifft beispielsweise auf längere Autobahnabschnitte oder auf Teilstrecken auf gut ausgebauten Straßen außerhalb von geschlossenen Ortschaften zu.

Bei einer vorteilhaften Weiterbildung des erfindungsgemäßen Kommunikationssystems werten die Mittel zum Erkennen von Verkehrssituationen Daten von mindestens einem Fahrerassistenzsystem und/oder von mindestens einem Fahrzeugsensor aus, um zu bestimmen, ob eine aktuelle Verkehrssituation einer der ersten oder einer der zweiten Verkehrssituationen entspricht.

So können beispielsweise die Daten von einem Antiblockiersystem und/oder einem Abstandswarnsystem und/oder einem Antriebsschlupfsystem und/oder einem Einparkunterstützungssystem und/oder einem Fahrspurerkennungssystem und/oder einem Einschlafwarnsystem und/oder einem Spurwechselassistent und/oder einem Stop&Go-Assistent und/oder einem Nightview-System und/oder einer Verkehrszeichenerkennung und/oder einer Fußgängererkennung ausgewertet werden. Durch das Auswerten dieser Daten können beispielsweise Fahrmanöver, die einer ersten Verkehrssituation entsprechen, wie Brems- und Beschleunigungsphasen, starke Lenkmanöver, Auffahren auf ein vorausfahrendes Fahrzeug usw., erkannt werden.

Bei einer besonders vorteilhaften Weiterbildung des Kommunikationssystems bestimmen die Mittel zum Erkennen von Verkehrssituationen auch eine voraussichtliche Zeitdauer der erkannten Verkehrssituation. Um einen verlässlichen Wert für die Zeitdauer bestimmen zu können, kann z.B. das Geschwindigkeitsprofil des Fahrzeugs anhand seines aktuellen Bewegungszustandes und der Eigenschaften des vorausliegenden Streckenabschnitts, wie Krümmungen, Geschwindigkeitsbegrenzungen usw., ausgewertet werden.

Bei einer besonders vorteilhaften Ausführungsform der Erfindung umfasst das erfindungsgemäße Kommunikationssystem neben den Mitteln zum Erkennen von Verkehrssituationen auch die oben beschriebene Benutzerschnittstelle, deren Einschränkungs-Betriebsmodus bei Vorliegen einer der ersten Verkehrssituationen vom Kommunikationssystem aktiviert wird. Die Bereitschaft zu warten hängt im Wesentlichen von der Wartedauer und von der Ursache für die Verzögerung ab. Durch die Kombination der Benutzerschnittstelle mit den Mitteln zum Erkennen von Verkehrssituationen können dem Anrufer in vorteilhafter Weise die Ursache und die voraussichtliche Zeitdauer für den Betrieb mit eingeschränkter Funktionalität angezeigt werden, da diese der Zeitdauer für eine aktuell vorliegende erste Verkehrssituation entspricht. Dadurch kann der Anrufer entscheiden, ob er bis zur Durchstellung des Anrufs warten oder eine andere von der Benutzerschnittstelle angebotene Kommunikationsfunktion auswählen will. Dem Anrufer kann dann beispielsweise mitgeteilt werden, dass der Fahrer sich gerade in einer schwierigen Verkehrssituation befindet und das Gespräch in ca. 20s entgegennehmen kann.

Bei einer weiteren vorteilhaften Weiterbildung des erfindungsgemäßen Kommunikationssystems wird der Fahrer durch das Kommunikationssystem frühzeitig auf eine nicht vermeidbare Unterbrechung einer bestehenden Kommunikationsverbindung hingewiesen, beispielsweise vor einem Einfahren in einen Tunnel oder in ein Gebiet, welches durch ein Mobilfunknetz nicht abgedeckt ist. Nähert sich das Fahrzeug beispielsweise einem Tunnel, dann kann der Fahrer durch eine entsprechende Anzeige oder ein akustisches Signal darauf hingewiesen werden, dass eine Fortsetzung des Telefongesprächs im Tunnel mit hoher Wahrscheinlichkeit nicht möglich sein wird. Zusätzlich wird dem Fahrer angezeigt, wann er den Tunnel erreichen wird (z.B. in 20 Sekunden) und wie lange er sich voraussichtlich im Tunnel befinden wird. Dies ermöglicht es dem Fahrer und seinem Gesprächspartner, das Gespräch geordnet zu beenden bzw. zu verabreden, es nach der Verbindungsunterbrechung wieder aufzunehmen. Zusätzlich speichert das Kommunikationssystem Informationen über die bestehende Kommunikationsverbindung und bietet diese Informationen dem Fahrer nach dem Tunnel automatisch wieder an, der die zuvor beendete Kommunikationsverbindung z.B. per Tastendruck wieder herstellen kann. Dadurch wird die Anzahl der für den Fahrer notwendigen Bedienaktionen minimiert. Die Informationen über Streckenabschnitte und Gebiete, in denen eine Mobilkommunikation nicht möglich ist, sind dabei vorzugsweise in einer digitalen Straßenkarte gespeichert.

Das Kommunikationssystem umfasst erfindungsgemäß eine Bedienschnittstelle, mit der ein situationsangepasstes Management von vom Fahrer bzw. Benutzer gewünschten Telefonkommunikationen möglich ist. Insbesondere bei Fahrten in unbekanntem Gebiet ist es für den Fahrer oft schwer, die für das Führen eines Telefongesprächs optimalen Streckenabschnitte zu erkennen. An diese Streckenabschnitte werden im wesentlichen zwei Ansprüche gestellt. Sie sollten zum einen keine schwierigen Fahrsituationen, d.h. erste Verkehrssituationen, enthalten, wie z.B. enge Kurven, Auf- und Ausfahrten, Kreuzungen usw., und sie sollten lang genug für die Funkkommunikation sein. Bei Fahrten in unbekanntem Gebiet verwendet der Fahrer häufig ein Navigationssystem, so dass es möglich ist, für die vom Navigationssystem berechnete Route die zweiten Streckenabschnitte zu bestimmen, die für die Telefonkommunikation am besten geeignet sind, z.B. längere Autobahnabschnitte oder Teilstrecken auf gut ausgebauten Straßen außerhalb von Ortschaften. Der Fahrer gibt vor Fahrtbeginn über die Bedienschnittstelle ein, wen er während der Fahrt anrufen möchte und wie lange die einzelnen Anrufe ungefähr dauern werden. Das Kommunikationssystem ordnet dann die mindestens eine vom Fahrer eingegebene Kommunikationsverbindung mindestens einem der von den Mitteln zum Erkennen von Verkehrssituationen bestimmten zweiten Streckenabschnitten zu, der am besten zur Durchführung der Telefonkommunikation geeignet ist. Dem Fahrer wird dann diese Zuordnung und der voraussichtliche optimale Zeitpunkt für die Kommunikationsverbindung als Kommunikationsvorschlag ausgegeben. Nimmt der Fahrer den Kommunikationsvorschlag an, dann kann ihm das Erreichen des zugeordneten zweiten Streckenabschnitts angezeigt werden. Zusätzlich oder alternativ kann die eingegebene Kommunikationsverbindung bei Erreichen des zugeordneten Streckenabschnitts ausgelöst werden.

Durch die Erfindung wird verhindert, dass der Fahrer in schwierigen Fahrsituationen durch eingehende und ausgehende Telefonanrufe von der eigentlichen Fahraufgabe abgelenkt wird und dadurch gefährliche Situationen entstehen. Die Erfindung liefert somit einen wichtigen Beitrag zur Verbesserung der Fahr- und Verkehrssicherheit. Vorteilhaft gegenüber anderen Lösungsansätzen ist, dass bei eingehenden Anrufen der Anrufer selbst in die Lage versetzt wird, über die Dringlichkeit seines Anrufs zu entscheiden. Dadurch wird sichergestellt, dass wirklich wichtige Anrufe nicht einfach verloren gehen. Dies ist aus Akzeptanzgründen besonders wichtig. Zum anderen wird bewusst darauf verzichtet, bereits begonnene Gespräche systemseitig zu unterbrechen, was vom Nutzer als komfortmindernd empfunden wird. Ist eine Unterbrechung des Gesprächs aufgrund externer Faktoren allerdings unvermeidlich, dann wird der Fahrer frühzeitig darauf hingewiesen, wodurch eine unerwartete Gesprächsunterbrechung vermieden und der Komfort erhöht wird. Gleichzeitig kann die Zahl der Bedienaktionen für das Wiederaufnehmen des Gesprächs reduziert werden, wodurch ebenfalls die Ablenkungswirkung des Telefons reduziert wird.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte Ausführungen darstellen können. Nachfolgend wird ein praktisches Ausführungsbeispiel anhand der Zeichnung näher beschrieben. Es zeigen:
- Fig. 1: ein Blockschaltbild eines Kommunikationssystems für ein Kraftfahrzeug und
- Fig. 2: ein Flussdiagramm eines vom System der Fig. 1 durchführbaren Kommunikationsverfahrens.

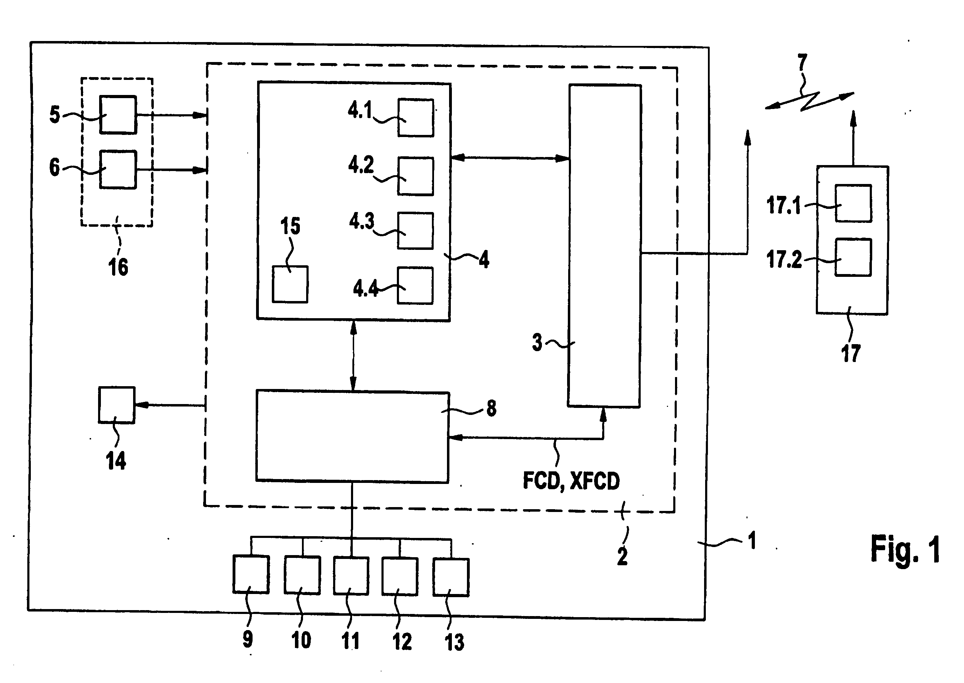

Fig. 1 zeigt in schematischer Blockdarstellung ein Kraftfahrzeug 1 mit dem erfindungsgemäßen Kommunikationssystem 2. Das Kommunikationssystem 2 umfasst eine Funkschnittstelle 3 zum drahtlosen Anschluss des Kommunikationssystems 2 an ein Funkkommunikationsnetz und zum Aufbau einer entsprechenden Kommunikationsverbindung 7, eine Benutzerschnittstelle 4 und Mittel zur Erkennung von Verkehrssituationen 8. Die Benutzerschnittstelle 4 schränkt in einem Einschränkungs-Betriebsmodus eine Funktionalität der Funkschnittstelle 3 so ein, dass ein Anrufer über sein Endgerät 17, beispielsweise ein Telefon, nicht direkt mit dem Benutzer bzw. Fahrer kommunizieren kann, sondern mit der Benutzerschnittstelle 4.

Im Einschränkungs-Betriebsmodus wird bei einem eingehenden Anruf ein Anrufsignal unterdrückt, und einem Anrufer werden mehrere Kommunikationsfunktionen 4.1 bis 4.4 zur Auswahl angeboten, wobei jeweils mindestens eine Kommunikationsfunktion 4.1 bis 4.4 auswählbar ist. Eine erste Kommunikationsfunktion 4.1 beendet die Kommunikationsverbindung, eine zweite Kommunikationsfunktion 4.2 verbindet den Anrufer mit einer Mailbox, eine dritte Kommunikationsfunktion 4.3 aktiviert das Anrufsignal und eine vierte Kommunikationsfunktion 4.4 hält die Kommunikationsverbindung 7 aufrecht und aktiviert nach Ablauf einer vorgebbaren Zeitspanne das Anrufsignal. Die Auswahl einer der Kommunikationsfunktionen 4.1 bis 4.4 erfolgt durch eine entsprechende Eingabe des Anrufers über die Eingabemittel 17.2 an seinem Endgerät 17.

Das Kommunikationssystem 2 ist über entsprechende elektrische Verbindungsleitungen zur Kommunikation mit dem Fahrer mit manuellen Betätigungsmitteln 5, mit einem Sprachbedienungssystem 6 und mit einer Anzeigeeinheit 14 verbunden. Zum Empfang von auszuwertenden Daten ist das Kommunikationssystem 2 über elektrische Verbindungsleitungen mit einem Navigationssystem 9, einem Ortungssystem 10, einer digitalen Karte 11, mindestens einem Fahrerassistenzsystem 12 und mindestens einem Fahrzeugsensor 13 verbunden. Zudem empfängt das Kommunikationssystem 2 über die Funkschnittstelle 3 FCD- und/oder XFCD-Daten von nicht dargestellten Stichprobenfahrzeugen.

Im dargestellten Ausführungsbeispiel ist die Benutzerschnittstelle 4 durch den Benutzer über die Bedienmittel 5, 6 oder automatisch durch das Kommunikationssystem 2 aktivierbar, beispielsweise in Abhängigkeit von vorgebbaren Verkehrssituationen.

Zur automatischen Aktivierung der Benutzerschnittstelle 4 umfasst das dargestellte Kommunikationssystem 2 Mittel 8 zur Erkennung von aktuellen und zukünftigen Verkehrssituationen, die Daten von einem Navigationssystem 9 und/oder von einem Ortungssystem 10 und/oder von Stichprobenfahrzeugen und/oder von einer digitalen Straßenkarte 11 auswerten, um erste Streckenabschnitte mit ersten Verkehrssituationen und/oder zweite Streckenabschnitte mit zweiten Verkehrssituationen zu bestimmen, wobei festgelegt wird, dass eine Funkkommunikation nicht durchführbar ist, wenn eine der ersten Verkehrssituationen erkannt wird, und dass eine Funkkommunikation durchführbar ist, wenn eine der zweiten Verkehrssituationen erkannt wird. Der Einschränkungs-Betriebsmodus der Benutzerschnittstelle 4 wird aktiviert, wenn eine der ersten Verkehrssituationen erkannt wird. Zur Bewertung, ob eine aktuelle Verkehrssituation eine der ersten oder eine der zweite Verkehrssituationen ist, werten die Mittel zum Erkennen von Verkehrssituationen 8 Daten von mindestens einem Fahrerassistenzsystem 12 und/oder von mindestens einem Fahrzeugsensor 13 aus. Durch das Auswerten dieser Daten können beispielsweise Fahrmanöver, die einer ersten Verkehrssituation entsprechen, wie Brems- und Beschleunigungsphasen, starke Lenkmanöver, Auffahren auf ein vorausfahrendes Fahrzeug usw., erkannt werden.

Das mindestens eine Fahrerassistenzsystem 12 umfasst beispielsweise ein Antiblockiersystem und/oder ein Abstandswarnsystem und/oder ein Antriebsschlupfsystem und/oder ein Einparkunterstützungssystem und/oder ein Fahrspurerkennungssystem und/oder ein Einschlafwarnsystem und/oder einen Spurwechselassistenten und/oder einen Stop&Go-Assistenten und/oder ein Nightview-System und/oder eine Verkehrszeichenerkennung und/oder eine Fußgängererkennung.

Die Mittel zur Erkennung von Verkehrssituationen 8 bestimmen zudem die voraussichtliche Zeitdauer für die ersten und zweiten Verkehrssituationen. Bei einer Aktivierung der Benutzerschnittstelle 4 durch das Kommunikationssystem 2 werden dem Anrufer der Grund und die voraussichtliche Zeitdauer für den Betrieb mit eingeschränkter Funktionalität auf seinem Endgerät 17 über eine entsprechende Anzeigeeinheit 17.1 angezeigt.

Des weiteren wird dem Benutzer bzw. Fahrer ein Befahren eines ersten und/oder zweiten Streckenabschnitts und die voraussichtliche Zeitdauer für das Befahren angezeigt, so dass er bei Bedarf eine Kommunikationsverbindung herstellen kann.

Als zusätzliche Funktionalität wird dem Benutzer bzw. Fahrer bei einer bestehenden Kommunikationsverbindung 7 ein bevorstehendes Befahren eines der ersten Streckenabschnitte angezeigt und die Informationen über eine bestehende Kommunikationsverbindung 7, beispielsweise die Telefonnummer des Kommunikationspartners, werden vor Erreichen dieses ersten Streckenabschnitts in einem Speicher 15 im Kommunikationssystem 2, beispielsweise in der Benutzerschnittstelle 4, gespeichert.

Nach Durchfahren des ersten Streckenabschnitts wird die Kommunikationsverbindung 7 durch Abruf der gespeicherten Informationen wiederhergestellt, wobei der Abruf der Informationen über die Bedienmittel 5, 6 erfolgt.

Erfindungsgemäß kann der Benutzer das dargestellte Kommunikationssystem 2 zur Planung seiner eigenen Anrufe nutzen. Zu diesem Zweck gibt der Benutzer beispielsweise vor Fahrtantritt seinen Zielort und die gewünschten, während der Fahrt aufzubauenden Kommunikationsverbindungen und eine voraussichtliche Gesprächsdauer über die Bedienschnittstelle 16 ein, welche die manuellen Betätigungsmittel 5 und das Sprachbediensystem 6 beinhaltet.

Das Kommunikationssystem 2 bestimmt in Abhängigkeit vom eingegebenen Zielort und der berechneten Route erste Streckenabschnitte, auf denen die Funkschnittstelle 3 aufgrund der dort vorliegenden Verkehrssituationen mit einer eingeschränkter Funktionalität zu betreiben ist, und/oder zweite Streckenabschnitte, auf denen aufgrund der dort vorliegenden Verkehrssituationen ein Normalbetrieb der Funkschnittstelle 3 möglich ist. Bei einer möglichen Ausführungsform der Erfindung werden dem Benutzer die ermittelten ersten und/oder zweiten Streckenabschnitte angezeigt. Das Kommunikationssystem 2 ordnet mindestens eine der eingegebenen gewünschten Kommunikationsverbindungen 7 mindestens einem der bestimmten zweiten Streckenabschnitte zu und gibt diese Zuordnung als Kommunikationsvorschlag über die Anzeigemittel 14 an den Benutzer aus, die beispielsweise als Bildschirm oder als Sprachausgabesystem ausgeführt sind.

Nimmt der Benutzer den Kommunikationsvorschlag an, dann speichert das Kommunikationssystem 2 die Informationen über die jeweils gewünschte Kommunikationsverbindung und den zugeordneten zweiten Streckenabschnitt. Zusätzlich führen die Mittel zum Erkennen von Verkehrssituationen 8 ständig eine Bewertung der aktuellen Verkehrssituation durch, bei der festgestellt wird, ob die aktuelle Verkehrssituation einer der ersten oder einer der zweiten Verkehrssituationen entspricht. Wenn beim Erreichen des zugeordneten zweiten Streckenabschnitts die aktuelle Verkehrssituation einer der zweiten Verkehrssituationen entspricht, wird die gewünschte Kommunikationsverbindung 7 vom Kommunikationssystem 2 mit den gespeicherten Informationen hergestellt. Es ist alternativ möglich, dass dem Benutzer nur angezeigt wird, dass er jetzt die gewünschte Kommunikationsverbindung 7 herstellen kann.

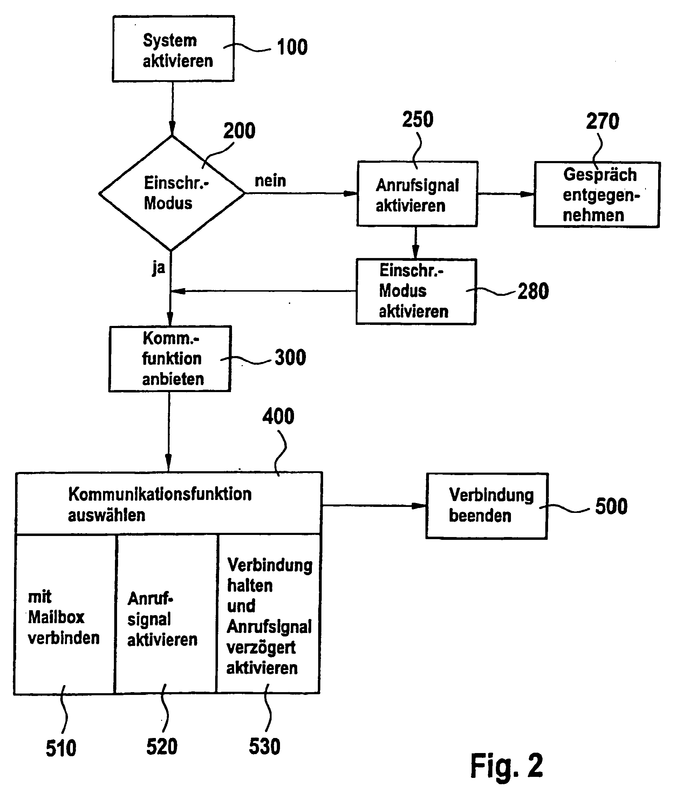

Fig. 2 zeigt ein Flussdiagramm für das Betriebsverfahren des Kommunikationssystems 2 von Fig. 1, bei dem in Abhängigkeit von vorgegebenen Bedingungen die Funktionalität der Funkschnittstelle 3 durch einen Einschränkungs-Betriebsmodus einschränkbar ist. Bei einem eingehenden Anruf, d.h. bei einer aufgebauten Kommunikationsverbindung 7, wird im Schritt 100 das Kommunikationssystem 2 aktiviert. Im Schritt 200 wird geprüft, ob das Kommunikationssystem 2 im Einschränkungs-Betriebsmodus betrieben wird, d.h. ob die Benutzerschnittstelle 6 aktiviert ist oder nicht, wobei der Einschränkungs-Betriebsmodus der Benutzerschnittstelle 4 wie oben beschrieben vom Kommunikationssystem 2 oder vom Benutzer aktiviert sein kann. Wenn der Einschränkungs-Betriebsmodus nicht aktiviert ist, wird im Schritt 250 das Anrufsignal aktiviert und der Benutzer kann das Gespräch im Schritt 270 entgegennehmen oder im Schritt 280 den Einschränkungs-Betriebsmodus der Benutzerschnittstelle 4 über die Bedienmittel 5, 6 aktivieren, um zu signalisieren, dass er das Gespräch nicht sofort, aber in Kürze entgegennehmen will. Im Einschränkungs-Betriebsmodus werden im Schritt 300 dem Anrufer mehrere Kommunikationsfunktionen 4.1 bis 4.4 zur Verfügung gestellt. Im Schritt 400 wählt der Anrufer, beispielsweise durch Zifferneingabe an seinem Endgerät 17 oder mittels Spracheingabe, eine der zur Verfügung gestellten Kommunikationsfunktionen 4.1 bis 4.4 aus.

Bei der Auswahl einer ersten Kommunikationsfunktion 4.1 wird im Schritt 500 die Kommunikationsverbindung beendet, diese Kommunikationsfunktion 4.1 wird auch durch Auflegen ausgelöst. Anschließend kehrt das Kommunikationssystem 2 bis zum Eingang eines neuen Anrufs in seinen Ausgangszustand zurück.

Bei Auswahl einer zweiten Kommunikationsfunktion 4.2 wird der Anrufer im Schritt 510 mit einer Mailbox verbunden.

Bei Auswahl einer dritten Kommunikationsfunktion 4.3 wird im Schritt 520 das Anrufsignal aktiviert.

Bei Auswahl einer vierten Kommunikationsfunktion 4.4 wird im Schritt 530 die Kommunikationsverbindung aufrechterhalten und nach Ablauf einer bestimmten Zeitspanne das Anrufsignal aktiviert. Die Zeitspanne wird in vorteilhafter Weise von den Mitteln zum Erkennen von Verkehrssituationen 8 bestimmt und entspricht der voraussichtlichen Zeitdauer bis die aktuelle Verkehrssituation zu beendet oder der aktuelle erste Streckenabschnitt durchfahren ist. Wenn der Einschränkungs-Betriebsmodus vom Benutzer über die Bedienmittel 5, 6 aktiviert wurde, kann die bestimmte Zeitspanne ein fest vorgegebenes Zeitintervall, beispielsweise 20s, sein. Alternativ zur Anzeige der Zeitdauer bis zum Durchstellen des Anrufs kann dem Anrufer angezeigt werden, dass der Benutzer das Gespräch in Kürze annehmen wird.

In einer vorteilhaften Weiterbildung der Benutzerschnittstelle wird in der Anzeigeeinheit 14 ein entgangener Anruf, d. h. ein Anruf der nicht entgegengenommen wurde, signalisiert. Dies ist z. B. der Fall, wenn der Anrufer die oben beschriebenen Kommunikationsfunktionen 4.1 oder 4.2 wählt. Diese Anzeige kann durch ein allgemein verständliches Symbol oder als Komplett-Text mit Name und Telefonnummer des Anrufers geschehen. In analoger Weise kann auf der Anzeigeeinheit ein Hinweis auf eine Nachricht in der Mailbox gegeben werden.

Nun kann der Benutzer über die Bedienmittel 5, 6 z. B. ein Funkkommunikation mit dem Anrufer herstellen, dessen Anruf entgangen ist oder z. B. eine Funkkommunikation mit seiner Mailbox herstellen.

In einer vorteilhaften Weiterbildung der Benutzerschnittstelle werden in analoger Weise zu den entgangenen Anrufen z. B. auch Kurznachrichten (SMS) und/oder elektronische Nachrichten (e-mail) auf der Anzeigeeinheit 14 angezeigt. Vorteilhafterweise erfolgt eine solche Anzeige nur im Stillstand des Fahrzeuges, um zu starke Ablenkungen des Benutzers von seiner eigentlichen Aufgabe zu vermeiden.

## Patentansprüche

1. Kommunikationssystem für ein Kraftfahrzeug (1) mit einer Funkschnittstelle (3) zum drahtlosen Anschluss an ein Funkkommunikationsnetz und zum Aufbau einer entsprechenden Kommunikationsverbindung (7) sowie Mitteln (8) zum Erkennen von ersten und/oder zweiten Verkehrssituationen und zum Festlegen einer Funkkommunikation als nicht durchführbar, wenn eine der ersten Verkehrssituationen erkannt wird, und als durchführbar, wenn eine der zweiten Verkehrssituationen erkannt wird,
**dadurch gekennzeichnet, dass**
mittels einer vom Kommunikationssystem (2) umfassten Bedienschnittstelle (16) vom Benutzer Informationen über mindestens eine während einer anschließenden Fahrt durchzuführende Kommunikationsverbindung (7) zur Durchführung während einer der zweiten Verkehrssituationen eingebbar sind.

2. Kommunikationssystem nach Anspruch 1,
**dadurch gekennzeichnet, dass**
durch das Kommunikationssystem (2) mindestens eine der eingegebenen geplanten Kommunikationsverbindungen (7) mindestens einem der bestimmten zweiten Streckenabschnitte zuordenbar ist und als Kommunikationsvorschlag ausgebbar ist.

3. Kommunikationssystem nach Anspruch 2,
**dadurch gekennzeichnet, dass**
durch das Kommunikationssystem (2) nach Annahme des Kommunikationsvorschlags die gewünschte Kommunikationsverbindung (7) bei Erreichen des zugeordneten zweiten Streckenabschnitts herstellbar ist.

4. Kommunikationssystem nach einem der Ansprüche 1 bis 3,
**dadurch gekennzeichnet dass**,
durch die Mittel zum Erkennen von Verkehrssituationen (8) in Abhängigkeit von einer vorgebbaren Route Daten von einem Navigationssystem (9) und/oder von einem Ortungssystem (10) und/oder von Stichprobenfahrzeugen und/oder von einer digitalen Straßenkarte (11) zur Bestimmung von ersten Streckenabschnitten mit ersten Verkehrssituationen und/oder zweiten Streckenabschnitten mit zweiten Verkehrssituationen auswertbar sind.

5. Kommunikationssystem nach Anspruch 4,
**dadurch gekennzeichnet, dass**
einem Benutzer ein Befahren eines der ersten und/oder der zweiten Streckenabschnitte durch eine Anzeigeeinheit (14) anzeigbar ist.

6. Kommunikationssystem nach einem der Ansprüche 1 bis 5,
**dadurch gekennzeichnet, dass**
durch die Mittel zum Erkennen von Verkehrssituationen (8) in Abhängigkeit von Daten von mindestens einem Fahrerassistenzsystem (12) und/oder von mindestens einem Fahrzeugsensor (13) entscheidbar ist, ob aktuell eine der ersten oder eine der zweiten Verkehrssituationen vorliegt.

7. Kommunikationssystem nach Anspruch 6,
**dadurch gekennzeichnet, dass**
das mindestens eine Fahrerassistenzsystem (12) ein Antiblockiersystem und/oder ein Abstandswarnsystem und/oder ein Antriebsschlupfsystem und/oder ein Einparkunterstützungssystem und/oder ein Fahrspurerkennungssystem und/oder ein Einschlafwarnsystem und/oder ein Spurwechselassistent und/oder ein Stop&Go-Assistent und/oder ein Nightview-System und/oder eine Verkehrszeichenerkennung und/oder eine Fußgängererkennung ist.

8. Kommunikationssystem nach einem der Ansprüche 1 bis 7,
**dadurch gekennzeichnet dass**,
durch die Mittel zum Erkennen von Verkehrssituationen (8) eine voraussichtliche Zeitdauer der erkannten Verkehrssituation bestimmbar ist.

9. Kommunikationssystem nach Anspruch 8,
**dadurch gekennzeichnet, dass**
einem Benutzer die voraussichtliche Zeitdauer für das Befahren durch eine Anzeigeeinheit (14) anzeigbar ist.

10. Kommunikationssystem nach einem der Ansprüche 1 bis 9,
**dadurch gekennzeichnet, dass**
durch die Mittel zum Erkennen von Verkehrssituationen bei Vorliegen einer der ersten Verkehrssituationen eine Benutzerschnittstelle (4) zum drahtlosen Anschluss an ein Funkkommunikationsnetz in einem Einschränkungs-Betriebsmodus betreibbar ist.

11. Kommunikationssystem nach Anspruch 10,
**dadurch gekennzeichnet, dass**
mittels der Benutzerschnittstelle (4) im Einschränkungs-Betriebsmodus bei einem Anruf dem Anrufer der Betrieb mit eingeschränkter Funktionalität anzeigbar ist und mehrere Kommunikationsfunktionen (4.1 bis 4.4) bereitstellbar sind, von denen mindestens eine Kommunikationsfunktion (4.1 bis 4.4) vom Anrufer auswählbar ist, wobei die ausgewählte Kommunikationsfunktion (4.1 bis 4.4) durch die Benutzerschnittstelle (4) aktivierbar ist.

12. Kommunikationssystem nach einem der Ansprüche 10 oder 11,
**dadurch gekennzeichnet, dass**
der Einschränkungs-Betriebsmodus der Benutzerschnittstelle (4) durch eine Benutzereingabe oder einen von fahrzeugseitigen Mitteln (8) abgegebenen Aktivierungsbefehl aktivierbar ist.

13. Kommunikationssystem nach Anspruch 12,
**dadurch gekennzeichnet, dass**
die Benutzereingabe über manuelle Betätigungsmittel (5) und/oder über ein Sprachbedienungssystem (6) durchführbar ist.

14. Kommunikationssystem nach einem der Ansprüche 10 bis 13,
**dadurch gekennzeichnet, dass**
im Einschränkungs-Betriebsmodus mittels der Benutzerschnittstelle (4) ein Anrufsignal unterdrückbar ist.

15. Kommunikationssystem nach einem der Ansprüche 10 bis 14,
**dadurch gekennzeichnet, dass**
eine erste der Kommunikationsfunktionen (4.1) darin besteht, die Kommunikationsverbindung (7) zu beenden.

16. Kommunikationssystem nach einem der Ansprüche 10 bis 15,
**dadurch gekennzeichnet, dass**
eine zweite der Kommunikationsfunktionen (4.2) darin besteht, den Anrufer mit einer Mailbox zu verbinden.

17. Kommunikationssystem nach einem der Ansprüche 10 bis 16,
**dadurch gekennzeichnet, dass**
eine dritte der Kommunikationsfunktionen (4.3) darin besteht, das Anrufsignal zu aktivieren.

18. Kommunikationssystem nach einem der Ansprüche 10 bis 17,
**dadurch gekennzeichnet, dass**
eine vierte der Kommunikationsfunktionen (4.4) darin besteht, die Kommunikationsverbindung (7) aufrechtzuerhalten und nach Ablauf einer bestimmbaren Zeitspanne das Anrufsignal zu aktivieren.

19. Kommunikationssystem nach einem der Ansprüche 10 bis 18,
**dadurch gekennzeichnet, dass**
mittels der Benutzerschnittstelle (4) dem Anrufer eine Ursache und/oder die voraussichtliche Zeitdauer für den Betrieb mit eingeschränkter Funktionalität anzeigbar ist.

20. Kommunikationssystem nach einem der Ansprüche 2 bis 19,
**dadurch gekennzeichnet, dass**
bei einer bestehenden Kommunikationsverbindung (7) vor Erreichen eines der ersten Streckenabschnitte Informationen über die bestehende Kommunikationsverbindung (7) in einem Speicher (15) speicherbar sind.

21. Kommunikationssystem nach Anspruch 20,
**dadurch gekennzeichnet, dass**
nach Durchfahren des ersten Streckenabschnitts die Kommunikationsverbindung (7) durch Abruf der gespeicherten Informationen wiederherstellbar ist.

22. Betriebsverfahren für ein Kommunikationssystem (2) in einem Kraftfahrzeug (1), bei dem in Abhängigkeit von einer vorgegebenen Route Daten ausgewertet werden, um erste Streckenabschnitte mit ersten Verkehrssituationen und/oder zweite Streckenabschnitte mit zweiten Verkehrssituationen zu erkennen und eine Funkkommunikation auf den ersten Streckenabschnitten als nicht durchführbar und auf den zweiten Streckenabschnitten als durchführbar festzulegen,
**dadurch gekennzeichnet dass**,
von einem Benutzer Informationen über mindestens eine während einer anschließenden Fahrt durchzuführende Kommunikationsverbindung (7) eingegeben werden, die mindestens einem der erkannten zweiten Streckenabschnitte zugeordnet wird und als Kommunikationsvorschlag ausgegeben wird.

23. Betriebsverfahren nach Anspruch 22,
**dadurch gekennzeichnet, dass**
nach Annahme des Kommunikationsvorschlags die gewünschte Kommunikationsverbindung (7) bei Erreichen des zugeordneten zweiten Streckenabschnitts hergestellt wird.

24. Betriebsverfahren nach einem der Ansprüche 22 oder 23,
**dadurch gekennzeichnet, dass**
vom Kommunikationssystem (2) in Abhängigkeit vom Vorliegen vorgegebener Verkehrssituationen und/oder durch eine Benutzereingabe ein Einschränkungs-Betriebsmodus für die Funktionalitäten des Betriebsverfahrens aktiviert wird.

25. Betriebsverfahren nach Anspruch 24,
**dadurch gekennzeichnet, dass**
das Vorliegen einer der vorgegebenen Verkehrssituationen durch eine Auswertung von Daten von einem Navigationssystem (9) und/oder von einem Ortungssystem (10) und/oder von Stichprobenfahrzeugen und/oder von einer digitalen Straßenkarte (11) und/oder von mindestens einem Fahrerassistenzsystem (12) und/oder von mindestens einem Fahrzeugsensor (13) erkannt wird.

26. Betriebsverfahren nach einem der Ansprüche 24 oder 25,
**dadurch gekennzeichnet, dass**
im Einschränkungsbetriebsmodus bei einem eingehenden Anruf dem Anrufer mehrere Kommunikationsfunktionen (4.1 bis 4.4) zur Auswahl angeboten werden.

27. Betriebsverfahren nach Anspruch 26,
**dadurch gekennzeichnet, dass**
nach der Auswahl mindestens eine ausgewählte Kommunikationsfunktion (4.1 bis 4.4) ausgeführt wird.

## Claims

1. Communication system for a motor vehicle (1) having a radio interface (3) for wireless connection to a radio communications network and for establishing a corresponding communications link (7) as well as means (8) for detecting first and/or second traffic situations and for defining a radio communication as being incapable of being carried out if one of the first traffic situations is detected, and as being capable of being carried out if one of the second traffic situations is detected, **characterized in that** information about at least one communication link (7) to be carried out during a subsequent journey can be input in order to be carried out during one of the second traffic situations by the user by means of an operator interface (16) included in the communication system (2).

2. Communication system according to Claim 1, **characterized in that** the communication system (2) can assign at least one of the input, planned communication links (7) to at least one of the specific second route sections and said communication link (7) can be output as a communication proposal.

3. Communication system according to Claim 2, **characterized in that** after the communication proposal has been accepted the communication system (2) can set up the desired communication link (7) when the assigned second route section is reached.

4. Communication system according to one of Claims 1 to 3, **characterized in that** the means for detecting traffic situations (8) can evaluate as a function of a predefinable route data from a navigation system (9) and/or from a locating system (10) and/or from sample vehicles and/or from a digital road map (11) in order to determine first route sections with first traffic situations and/or second route sections with second traffic situations.

5. Communication system according to Claim 4, **characterized in that** a display unit (14) can indicate to a user that he is travelling on one of the first and/or second route sections.

6. Communication system according to one of Claims 1 to 5, **characterized in that** the means for detecting traffic situations (8) can decide, as a function of data from at least one driver assistance system (12) and/or from at least one vehicle sensor (13), whether one of the first or one of the second traffic situations is present at a particular time.

7. Communication system according to Claim 6, **characterized in that** the at least one driver assistance system (12) is an anti-lock brake system and/or an inter-vehicle distance warning system and/or a traction control system and/or a parking assistance system and/or a driving lane detection system and/or a system for warning against falling asleep at the wheel and/or a lane changing assistance system and/or a stop and go assistance system and/or a night view system and/or a road sign detection system and/or a pedestrian detection system.

8. Communication system according to one of Claims 1 to 7, **characterized in that** the means for detecting traffic situations (8) can determine an anticipated duration of the detected traffic situation.

9. Communication system according to Claim 8, **characterized in that** a display unit (14) can indicate the anticipated duration of the travel to a user.

10. Communication system according to one of Claims 1 to 9, **characterized in that** the means for detecting traffic situations when one of the first traffic situations is present is a user interface (4) for wirefree connection to a radio communication network in a restricted operating mode.

11. Communication system according to Claim 10, **characterized in that** during a call in the restricted operating mode by means of the user interface (4) it is possible to indicate the operation with restricted functionality to the caller and to make available a plurality of communication functions (4.1 to 4.4), at least one communication function (4.1 to 4.4) of which can be selected by the caller, it being possible to activate the selected communication function (4.1 to 4.4) by means of the user interface (4).

12. Communication system according to one of Claims 10 or 11, **characterized in that** the restricted operating mode of the user interface (4) can be activated by a user input or an activation command which is issued by means (8) at the vehicle.

13. Communication system according to Claim 12, **characterized in that** the user input can be carried out using manual activation means (5) and/or using a voice command system (6).

14. Communication system according to one of Claims 10 to 13, **characterized in that** in the restricted operating mode it is possible to suppress a call signal by means of the user interface (4).

15. Communication system according to one of Claims 10 to 14, **characterized in that** a first of the communication functions (4.1) consists in ending the communication link (7).

16. Communication system according to one of Claims 10 to 15, **characterized in that** a second of the communication functions (4.2) consists in connecting the caller to a mailbox.

17. Communication system according to one of Claims 10 to 16, **characterized in that** a third of the communication functions consists in activating the call signal.

18. Communication system according to one of Claims 10 to 17, **characterized in that** a fourth of the communication functions (4.4) consists in maintaining the communication link (7) and activating the call signal after expiry of a time period which can be specified.

19. Communication system according to one of Claims 10 to 18, **characterized in that** a cause and/or the anticipated duration of the operation with restricted functionality can be indicated to the user by means of the user interface (4).

20. Communication system according to one of Claims 2 to 19, **characterized in that** when there is an existing communication link (7) before one of the first route sections is reached, it is possible to store information about the existing communication link (7) in a memory (15).

21. Communication system according to Claim 20, **characterized in that**, after the first route section has travelled through, the communication link (7) can be restored by calling the stored information.

22. Operating method for a communication system (2) in a motor vehicle (1), in which data is evaluated as a function of a predefined route in order to detect first route sections with first traffic situations and/or second route sections with second traffic situations, and in order to define a radio communication on the first route sections as not being capable of being carried out, and on the second route sections as being capable of being carried out, **characterized in that** information about at least one communication link (7) which is to be carried out during a subsequent journey is input by a user, is assigned to at least one of the detected second route sections and is output as a communications proposal.

23. Operating method according to Claim 22, **characterized in that** after the communication proposal has been accepted, the desired communication link (7) is established when the assigned second route section is reached.

24. Operating method according to one of Claims 22 or 23, **characterized in that** a restricted operating mode for the functionalities of the operating method is activated by the communication system (2) as a function of the presence of predefined traffic situations and/or by a user input.

25. Operating method according to Claim 24, **characterized in that** the presence of one of the predefined traffic situations is detected by evaluating data from a navigation system (9) and/or from a locating system (10) and/or from sample vehicles and/or from a digital road map (11) and/or from at least one driver assistance system (12) and/or from at least one vehicle sensor (13).

26. Operating method according to one of Claims 24 or 25, **characterized in that** when there is an incoming call in the restricted operating mode a plurality of communication functions (4.1 to 4.4) are offered to the caller for selection.

27. Operating method according to Claim 26, **characterized in that** after the selection at least one selected communication function (4.1 to 4.4) is carried out.

## Revendications

1. Système de communication pour un véhicule automobile (1) comprenant une interface radioélectrique (3) pour la connexion sans fil à un réseau de radiocommunication et pour établir une liaison de communication (7) correspondante ainsi que des moyens (8) pour détecter des premières et/ou des deuxièmes situations de trafic et pour déterminer qu'une radiocommunication ne peut pas avoir lieu si une première situation de trafic est détectée et peut avoir lieu lorsque la deuxième situation de trafic est détectée, **caractérisé en ce que** des informations sur au moins une liaison de communication (7) à effectuer pendant un déplacement qui suit peuvent être saisies par l'utilisateur au moyen d'une interface de commande (16) comprise dans le système de communication (2) en vue de l'exécution pendant l'une des deuxièmes situations de trafic.

2. Système de communication selon la revendication 1, **caractérisé en ce que** par le biais du système de communication (2), au moins l'une des liaisons de communication (7) prévues saisies peut être associée à au moine l'une des deuxièmes sections de trajet déterminées et peut être émise sous la forme d'une proposition de communication.

3. Système de communication selon la revendication 2, **caractérisé en ce que** par le biais du système de communication (2), après avoir accepté la proposition de communication, la liaison de communication (7) souhaitée peut être établie en atteignant la deuxième section de trajet associée.

4. Système de communication selon l'une des revendications 1 à 3, **caractérisé en ce que** les données d'un système de navigation (9) et/ou d'un système de localisation (10) et/ou d'échantillons de véhicules et/ou d'une carte routière numérique (11) peuvent être interprétées par les moyens de détection des situations de trafic (8) en fonction d'une route pouvant être prédéfinie afin de déterminer des premières sections de trajet avec des premières situations de trafic et/ou des deuxièmes sections de trajet avec des deuxièmes situations de trafic.

5. Système de communication selon la revendication 4, **caractérisé en ce que** l'une des premières et/ou des deuxièmes sections de trafic peut être affichée pour un utilisateur par une unité d'affichage (14).

6. Système de communication selon l'une des revendications 1 à 5, **caractérisé en ce que** les moyens de détection des situations de trafic (8) permettent, en fonction des données d'au moins un système d'assistance au conducteur (12) et/ou d'au moins un capteur de véhicule (13), de décider s'il y a actuellement présence de l'une des premières ou des deuxièmes situations de trafic.

7. Système de communication selon la revendication 6, **caractérisé en ce que** l'au moins un système d'assistance au conducteur (12) est un système antiblocage et/ou un système d'alerte d'écart et/ou un système de patinage à l'accélération et/ou un système d'assistance au stationnement et/ou un système de détection de bande de circulation et/ou un système d'alerte d'endormissement et/ou un assistant de changement de voie et/ou un assistant d'arrêt/départ et/ou un système de vision nocturne et/ou un dispositif de reconnaissance des panneaux de circulation et/ou un dispositif de détection de piéton.

8. Système de communication selon l'une des revendications 1 à 7, **caractérisé en ce que** les moyens de détection des situations de trafic (8) permettent de déterminer une durée probable de la situation de trafic détectée.

9. Système de communication selon la revendication 8, **caractérisé en ce que** la durée probable du parcours peut être affichée pour un utilisateur par une unité d'affichage (14).

10. Système de communication selon l'une des revendications 1 à 9, **caractérisé en ce que** les moyens de détection des situations de trafic permettent, en cas de détection des premières situations de trafic, d'utiliser une interface utilisateur (4) en vue de la connexion sans fil à un réseau de radiocommunication dans un mode de fonctionnement à restriction.

11. Système de communication selon la revendication 10, **caractérisé en ce que** le fonctionnement avec fonctionnalité restreinte peut être affiché pour l'appelant en cas d'appel au moyen de l'interface utilisateur (4) et plusieurs fonctions de communication (4.1 à 4.4) peuvent être mises à disposition parmi lesquelles au moins une fonction de communication (4.1 à 4.4) peut être sélectionnée par l'appelant, la fonction de communication (4.1 à 4.4) sélectionnée pouvant être activée par le biais de l'interface utilisateur (4).

12. Système de communication selon l'une des revendications 10 ou 11, **caractérisé en ce que** le mode de fonctionnement à restriction de l'interface utilisateur (4) peut être activé par une saisie de l'utilisateur ou par une instruction d'activation délivrée par des moyens (8) du côté du véhicule.

13. Système de communication selon la revendication 12, **caractérisé en ce que** la saisie de l'utilisateur peut être effectuée par le biais de moyens d'actionnement manuels (5) et/ou par le biais d'un système de commande vocale (6).

14. Système de communication selon l'une des revendications 10 à 13, **caractérisé en ce qu'**en mode de fonctionnement à restriction, un signal d'appel peut être inhibé au moyen de l'interface utilisateur (4).

15. Système de communication selon l'une des revendications 10 à 14, **caractérisé en ce qu'**une première fonction de communication (4.1) consiste à mettre fin à la liaison de communication (7).

16. Système de communication selon l'une des revendications 10 à 15, **caractérisé en ce qu'**une deuxième fonction de communication (4.2) consiste à relier l'appelant avec une boîte de messagerie.

17. Système de communication selon l'une des revendications 10 à 16, **caractérisé en ce qu'**une troisième fonction de communication (4.3) consiste à activer le signal d'appel.

18. Système de communication selon l'une des revendications 10 à 17, **caractérisé en ce qu'**une quatrième fonction de communication (4.4) consiste à maintenir la liaison de communication (7) et activer le signal d'appel après écoulement d'un intervalle de temps donné.

19. Système de communication selon l'une des revendications 10 à 18, **caractérisé en ce qu'**une cause et/ou la durée probable du fonctionnement avec fonctionnalité restreinte peut être affichée pour l'appelant au moyen de l'interface utilisateur (4).

20. Système de communication selon l'une des revendications 2 à 19, **caractérisé en ce que** lorsqu'une liaison de communication (7) est en cours, des informations sur la liaison de communication (7) en cours peuvent être enregistrées dans une mémoire (15) avant d'atteindre l'une des premières sections de trajet.

21. Système de communication selon la revendication 20, **caractérisé en ce que** la liaison de communication (7) est rétablie en invoquant les informations enregistrées après avoir traversé la première section de trajet.

22. Procédé d'exploitation d'un système de communication (2) dans un véhicule automobile (1), avec lequel des données sont interprétées en fonction d'une route prédéfinie afin de détecter des premières sections de trajet avec des premières situations de trafic et/ou des deuxièmes sections de trajet avec des deuxièmes situations de trafic et de déterminer qu'une radiocommunication ne peut pas avoir lieu sur les premières sections de trajet et peut avoir lieu sur les deuxièmes sections de trajet, **caractérisé en ce que** des informations sur au moins une liaison de communication (7) à effectuer pendant un déplacement qui suit sont saisies par un utilisateur, lesquelles sont associées à au moins l'une des deuxièmes situations de trafic détectées et émises sous la forme d'une proposition de communication.

23. Procédé d'exploitation selon la revendication 22, **caractérisé en ce qu'**après avoir accepté la proposition de communication, la liaison de communication (7) souhaitée est établie en atteignant la deuxième section de trajet associée.

24. Procédé d'exploitation selon l'une des revendications 22 ou 23, **caractérisé en ce qu'**un mode de fonctionnement à restriction pour les fonctionnalités du procédé d'exploitation est activé par le système de communication (2) en fonction de la présence de situations de trafic prédéfinies et/ou par une saisie de l'utilisateur.

25. Procédé d'exploitation selon la revendication 24, **caractérisé en ce que** la présence de l'une des situations de trafic prédéfinies est détectée par une interprétation des données d'un système de navigation (9) et/ou d'un système de localisation (10) et/ou d'échantillons de véhicules et/ou d'une carte routière numérique (11) et/ou d'au moins un système d'assistance au conducteur (12) et/ou d'au moins un capteur de véhicule (13).

26. Procédé d'exploitation selon l'une des revendications 24 ou 25, **caractérisé en ce qu'**en mode de fonctionnement avec restriction, en présence d'un appel entrant, plusieurs fonctions de communication (4.1 à 4.4) sont proposées au choix de l'appelant.

27. Procédé d'exploitation selon la revendication 26, **caractérisé en ce qu'**au moins une fonction de communication (4.1 à 4.4) sélectionnée est exécutée après la sélection.
